# FASCICULE DE BREVET EUROPEEN

(11) **EP 2 681 067 B1**
(45) Date de publication et mention de la délivrance du brevet: **08.11.2017**
(21) Numéro de dépôt: 12709013.2
(22) Date de dépôt: 28.02.2012
(51) Int. Cl.: B60K 37/02, G01D 7/00, G01D 11/28, G02F 1/13357, B60Q 3/14

(54) **TABLEAU DE BORD ET METHODE D'ASSEMBLAGE D'UN TABLEAU DE BORD**
ARMATURENBRETT UND VERFAHREN ZUR MONTAGE EINES ARMATURENBRETTS
DASHBOARD AND METHOD FOR ASSEMBLING A DASHBOARD

(30) Priorité: 03.03.2011 DE 102011012933; 07.06.2011 FR 1101736
(43) Date de publication de la demande: 08.01.2014
(73) Titulaire: Johnson Controls Automotive Electronics SAS, 95892 Cergy-Pontoise Cedex (FR)
(72) Inventeur: HENON, Fabrice, F-95800 Cergy (FR); BOX, Benoit, F-95290 L'isle Adam (FR)
(74) Mandataire: Schwöbel, Thilo K.
(86) Numéro de dépôt international: PCT/EP2012/000861
(87) Numéro de publication internationale: WO 2012/116804

(56) Documents cités:
- EP-A1- 1 442 919
- WO-A1-2008/022776
- WO-A2-03/041982
- US-A1- 2007 263 374

## Description

La présente invention concerne, d'une part, un tableau de bord, notamment pour véhicule automobile, et d'autre part, une méthode d'assemblage d'un tableau de bord pour véhicule automobile.

Dans l'état connu de la technique, un tableau de bord pour véhicule automobile est connu produisant un effet luminescent d'auréole (effet halo en anglais), par exemple du document US 2006/0120062 A1.

De tels tableaux de bord peuvent comprendre une aiguille telle qu'une aiguille coudée par exemple pour afficher une valeur comme la vitesse ou d'autres grandeurs qui intéressent un conducteur d'un véhicule.

Par ailleurs, des tableaux de bord sont connus comprenant une zone d'affichage comprenant une première partie et comprenant une deuxième partie, la première partie de la zone d'affichage étant localisé dans un premier plan d'extension principale, la deuxième partie de la zone d'affichage étant localisé dans un deuxième plan d'extension principale, tel que la première partie de la zone d'affichage est localisée dans une zone centrale du tableau de bord. Un tableau de bord pour véhicules automobiles et une méthode d'assemblage d'un tableau de bord pour véhicules automobiles comprenant les caractéristiques des préambules des revendications 1 et 8 sont connus du document EP 1 442 919 A1.

Il est également connu de prévoir des aiguilles coudées qui peuvent être entrainées en rotation autour d'un axe de rotation derrière le cadran du tableau de bord pour permettre au tableau de bord d'afficher d'autres informations à l'endroit ou aux alentours de l'axe de rotation de l'aiguille.

Selon l'art antérieur, il est difficile de réaliser un tableau de bord de telle manière que les coûts associés sont minimisés et néanmoins une multitude de différents fonctions sont réalisées, notamment des fonctions de confort pour l'utilisateur tels que des modes d'illumination du tableau de bord.

La présente invention à notamment pour but de palier aux inconvénients de l'art connu, et notamment ceux cités ci-dessus et à également pour but de proposer un tableau de bord de façon à réaliser d'avantages de modes d'illumination.

Suivant l'invention, ce but est atteint par un tableau de bord pour véhicules automobiles, le tableau de bord comprenant au moins une zone d'affichage,
-- la zone d'affichage comprenant une première partie,
-- la zone d'affichage comprenant une deuxième partie,
la première partie de la zone d'affichage étant localisé dans un premier plan d'extension principale,
la deuxième partie de la zone d'affichage étant localisé dans un deuxième plan d'extension principale,
le deuxième plan d'extension principale étant localisé parallèle au premier plan d'extension principale, le deuxième plan d'extension principale étant translaté par rapport au premier plan d'extension principale vers un utilisateur du tableau de bord de manière à ce que la deuxième partie de la zone d'affichage forme une ouverture de diaphragme au moins partiellement autour de la première partie de la zone d'affichage et que la première partie de la zone d'affichage est localisée dans une zone centrale du tableau de bord, le tableau de bord comprenant une source de lumière, et la zone d'affichage comprenant un élément de cadre pour définir la première partie de la zone d'affichage, la source de lumière comprenant une première partie pour rétro-éclairer la première partie de la zone d'affichage, et la source de lumière comprenant une deuxième partie dans laquelle la source de lumière dépasse la première partie de zone d'affichage.

De par une telle réalisation du tableau de bord, il est avantageusement possible de réaliser une illumination d'auréole entre la première partie de la zone d'affichage et la deuxième partie de la zone d'affichage.

Selon la présente invention, la deuxième partie de la zone d'affichage comprend une autre source de lumière. Avec la source de lumière et l'autre source de lumière, il est possible de rétro-éclairer la première partie de la zone d'affichage et la deuxième partie de la zone d'affichage. Le tableau de bord comprend un élément de fixation associé à la première partie de la zone d'affichage. Par ailleurs, le tableau de bord comprend la source de lumière et un dispositif d'affichage, la source de lumière et le dispositif d'affichage étant également associés à la première partie de la zone d'affichage. Il est préféré selon la présente invention que le dispositif d'affichage associé à la première partie de la zone d'affichage correspond approximativement, quant à ses dimensions, à l'élément de cadre pour définir la première partie de la zone d'affichage. Il est prévu selon la présente invention que la source de lumière dépasse (dans sa deuxième partie) la première partie de la zone d'affichage, c'est à dire que la source de lumière dépasse (dans sa deuxième partie) l'élément de cadre pour définir la première partie de la zone d'affichage.

Ainsi, il est avantageusement possible selon la présente invention qu'une illumination égale ou régulière peut être réalisée à l'endroit du saut entre le premier plan d'extension principale et le deuxième plan d'extension principale (c'est à dire à l'endroit entre la première partie de la zone d'affichage et la deuxième partie de la zone d'affichage).

Un perfectionnement préféré de l'invention réside dans le fait que la lumière de la deuxième partie de la source de lumière illumine la région de l'élément de cadre pour définir la première partie de la zone d'affichage.

De par une telle réalisation du tableau de bord selon la présente invention, il est avantageusement possible d'adapter la (première partie de la) source de lumière à l'illumination de la première partie de la zone d'affichage.

Selon un autre mode de réalisation préféré du tableau de bord selon la présente invention, il est prévu que l'illumination de la deuxième partie de la source de lumière est visible par un utilisateur du tableau de bord.

Selon encore un autre mode de réalisation préféré du tableau de bord selon la présente invention, il est prévu que la lumière de la deuxième partie de source de lumière est visible par un utilisateur du tableau de bord dans la partie extérieur de l'élément de cadre pour définir la première partie de la zone d'affichage.

De par une telle réalisation du tableau de bord, il est avantageusement possible de réaliser un effet d'auréole autour de la première partie de la zone d'affichage.

Selon la présente invention, il est prévu que le tableau de bord comprend une aiguille entraînée en rotation autour d'un axe de rotation, l'axe de rotation étant prévue positionnée dans la première partie de la zone d'affichage, l'aiguille étant visible par un utilisateur uniquement dans la deuxième partie de la zone d'affichage.

De par une telle réalisation du tableau de bord, il est avantageusement possible d'utiliser la partie centrale du tableau de bord pour l'affichage d'une information autre que l'information indiquée par l'aiguille.

Un autre perfectionnement préféré de l'invention réside dans le fait que la première partie de la zone d'affichage comprend un dispositif d'affichage, notamment à cristaux liquides (LCD, en anglais: liquid crystal display).

Encore un autre perfectionnement préféré de l'invention réside dans le fait que le dispositif d'affichage est un dispositif d'affichage de type matriciel.

Un autre perfectionnement préféré de l'invention réside dans le fait que le tableau de bord comprend une aiguille entrainée en rotation autour d'un axe de rotation, l'axe de rotation étant prévue positionnée dans la première partie de la zone d'affichage, l'aiguille étant visible par un utilisateur dans la première partie de la zone d'affichage.

Un autre objet de la présente invention concerne une méthode d'assemblage d'un tableau de bord pour véhicules automobiles selon la revendication 8. D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue schématique de dessus d'un tableau de bord rétro-éclairé,
la figure 2 est une vue schématique d'un tableau de bord rétro-éclairé selon l'état de la technique connu,
la figure 3A est une vue schématique d'explosion d'un tableau de bord selon la figure 2,
la figure 3B est une vue schématique de perspective d'un dispositif de support, d'un élément de fixation avec une source de lumière et avec un dispositif d'affichage rétro-éclairé selon l'état de la technique,
la figure 3C est une vue schématique de perspective d'un élément de cadre d'un tableau de bord,
la figure 4A est une vue schématique de dessus d'un élément de fixation avec une source de lumière selon l'état de la technique,
la figure 4B est une vue schématique de dessus d'un dispositif de support avec une source de lumière et avec un dispositif d'affichage rétro-éclairé selon l'état de la technique,
la figure 5A est une vue schématique de dessus d'un dispositif de support avec une source de lumière,
la figure 5B est une vue schématique de dessus d'un dispositif de support avec une source de lumière et un dispositif d'affichage,
la figure 6A est une vue schématique de dessus d'un dispositif d'affichage et d'une source de lumière selon la Figure 5B et un dispositif de fixation, et
la figure 6B est une vue schématique de dessus d'un dispositif d'affichage rétro-éclairé avec des informations affichées, positionné dans un élément de cadre et avec une illumination périphérique quasiment homogène.

### DESCRIPTION DES DESSINS

Des parties ou composants correspondants dans différentes figures sont désignés par les mêmes signes de référence dans les différentes figures.

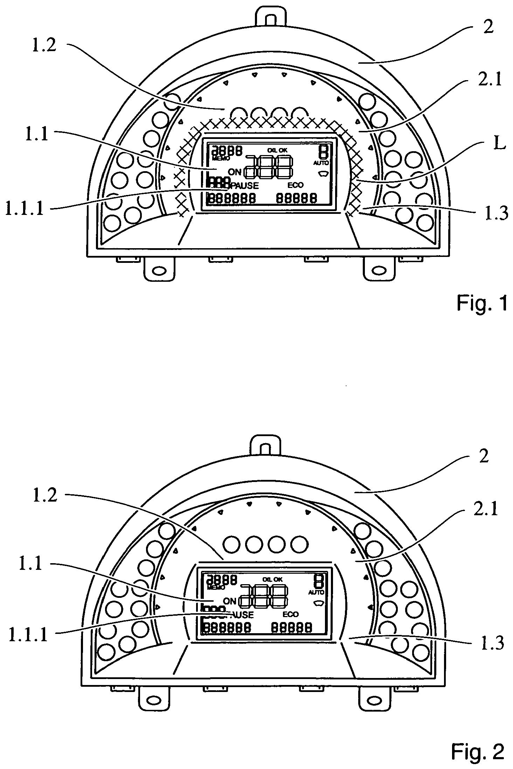

La figure 1 est une vue schématique de dessus d'un tableau de bord 1.

Le tableau de bord 1 est entouré par un dispositif de cadre 2. Le tableau de bord 1 comprend au moins une zone d'affichage, la zone d'affichage comprenant une première partie 1.1 de la zone d'affichage et une deuxième partie 1.2 de la zone d'affichage. La première partie 1.1 de la zone d'affichage est entouré par un élément de cadre 2.1 qui fait partie du dispositif de cadre 2. L'élément de cadre 2.1 est aussi appelé cadre 2.1 par la suite.

La première partie 1.1 de la zone d'affichage comprend (ou est localisé dans) un premier plan d'extension principale. La deuxième partie 1.2 de la zone d'affichage comprend (ou est localisé dans) un deuxième plan d'extension principale. Le deuxième plan d'extension principale est localisé parallèle au premier plan d'extension principale, le deuxième plan d'extension principale étant translaté par rapport au premier plan d'extension principale vers un utilisateur du tableau de bord 1 de manière à ce que la deuxième partie 1.2 de la zone d'affichage forme une ouverture de diaphragme 1.3 au moins partiellement autour de la première partie 1.1 de la zone d'affichage et que la première partie 1.1 de la zone d'affichage est localisée dans une zone centrale du tableau de bord 1.

Selon l'invention, la deuxième partie 1.2 de la zone d'affichage contourne la première partie 1.1 de la zone d'affichage de telle manière que la deuxième partie 1.2 de la zone d'affichage comprend un cadran pour une aiguille qui peut être entraîné en rotation autour d'un axe de rotation, l'aiguille étant de préférence prévue dans les première et deuxième parties 1.1, 1.2 de la zone d'affichage. L'aiguille est prévue
en tant qu'aiguille coudée, non-visible par un utilisateur dans (ou devant) la première partie 1.1 de la zone d'affichage et visible, par un utilisateur, uniquement dans (ou devant) la deuxième partie 1.2 de la zone d'affichage. A l'endroit entre la première partie 1.1 de la zone d'affichage et la deuxième partie 1.2 de la zone d'affichage, une transition est réalisée du premier plan d'extension principale au deuxième plan d'extension principale. Cette transition n'est pas visible par un utilisateur. La première partie 1.1 de la zone d'affichage est au moins partiellement contournée part la deuxième partie 1.2 de la zone d'affichage tel que l'ouverture de diaphragme 1.3 est réalisée. L'ouverture de diaphragme 1.3 est réalisé en tant que bord de diaphragme qui contourne la première partie 1.1 de la zone d'affichage qui est contourné au moins partiellement par la deuxième partie 1.2 de la zone d'affichage. Il est également possible et préféré selon la présente invention que la première partie 1.1 est complètement contourné par la deuxième partie 1.2 de la zone d'affichage.

Dans l'exemple représenté, la première partie 1.1 de la zone d'affichage est prévue en tant que dispositif d'affichage 1.1.1 ayant la possibilité d'afficher un nombre d'informations affichée, notamment en forme de dispositif d'affichage à transistors à couche mince (en anglais: TFf-display, thin film transistor display). Au dispositif d'affichage 1.1.1 est associé une source de lumière 1.1.2 qui est attachée au dispositif d'affichage 1.1.1 par l'intermédiaire
-- d'une fixation par adhésion et/ou
-- par la forme du dispositif d'affichage 1.1.1 et de la source de lumière 1.1.2 et/ou
-- par une fusion des matériaux du dispositif d'affichage 1.1.1 et de la source de lumière 1.1.2.

La source de lumière 1.1.2 sert à rétro-éclairer la première partie 1.1 de la zone d'affichage. A l'endroit de l'ouverture de diaphragme 1.3 de la deuxième partie de la zone d'affichage, c'est à dire à l'endroit de la transition entre la première partie 1.1 de la zone d'affichage et la deuxième partie 1.2 de la zone d'affichage, il y a une émergence de la lumière L telle que l'émergence est distribuée de manière quasiment homogène autour de l'ouverture de diaphragme 1.3, notamment quasiment homogène par rapport au rétro-éclairage de la deuxième partie 1.2 de la zone d'affichage.

L'émergence de la lumière L à l'endroit de l'ouverture de diaphragme 1.3 a un effet d'auréole (en anglais: effet "halo") dans la direction d'un utilisateur du tableau de bord, c'est à dire une couronne de lumière (ou un demi-cercle de lumière) autour de la première partie 1.1 de la zone d'affichage, c'est à dire autour du dispositif d'affichage 1.1.1.

La deuxième partie 1.2 de la zone d'affichage comprend un film (ou une couche) qui est en partie non-transparent (ou qui a une transparence réduite dans certaines parties). D'autres parties de ce film (ou de cette couche) sont prévues avec une plus grand transparence en forme de symboles et/ou en forme d'un cadran et/ou en forme de chiffres de telle manière que du à un rétro-éclairage de la deuxième partie 1.2 de la zone d'affichage les symboles et/ou le cadran et/ou les chiffres sont bien visibles par un utilisateur du tableau de bord du véhicule.

Les figures 2 à 3C montrent un tableau de bord selon l'état de la technique.

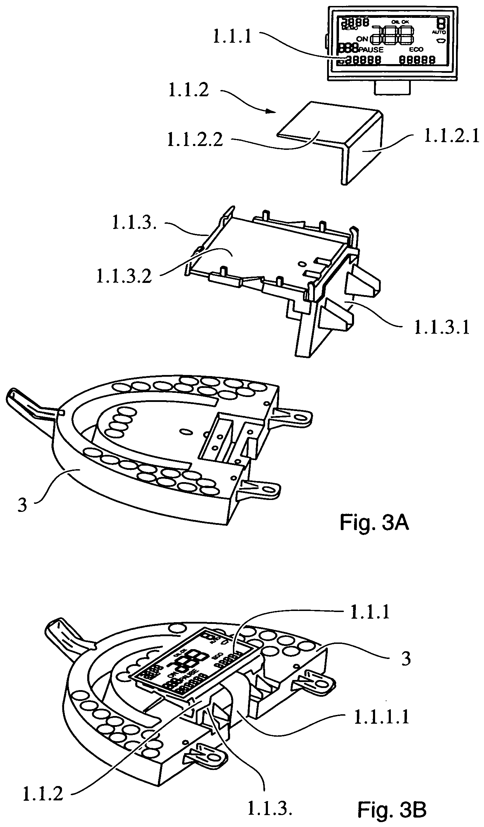

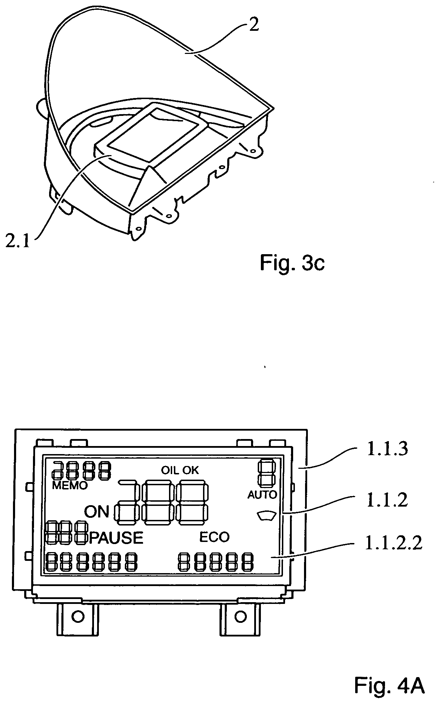

Le dispositif d'affichage 1.1.1 comprend un élément conducteur 1.1.1.1 qui relie le dispositif d'affichage 1.1.1 avec un module de contrôle (qui n'est pas représenté dans les figures et) à l'aide duquel le dispositif d'affichage 1.1.1 peut être contrôlé. Dans l'exemple représenté, la source de lumière 1.1.2 est réalisée en tant que matrice de diodes électroluminescentes (en anglais: LED array, array of light emitting diodes) et formé en un angle, comportant une première partie (ou branche) 1.1.2.1 et une deuxième partie (ou branche) 1.1.2.2 qui sont orienté l'un par rapport à l'autre en un angle de 90°. La première partie (ou branche) 1.1.2.1 de la source de lumière 1.1.2 est par exemple orientée horizontalement dans sa position d'utilisation (mais représenté verticalement dans la figure 3A), et la deuxième partie (ou branche) 1.1.2.2 de la source de lumière 1.1.2 est par exemple orientée verticalement dans sa position d'utilisation (mais représenté horizontalement dans la figure 3A). Par exemple, la deuxième partie (ou branche) 1.1.2.2 de la source de lumière 1.1.2 forme une surface plane qui est orientée vers l'utilisateur. La première partie (ou branche) 1.1.2.1 de la source de lumière 1.1.2 est détourné de l'utilisateur et orienté vers un dispositif de fixation 1.1.3. La première partie (ou branche) 1.1.2.1 de la source de lumière 1.1.2 sert à positionner ou attacher la source de lumière 1.1.2 à l'élément de fixation 1.1.3. La source de lumière 1.1.2 est attachée à l'élément de fixation 1.1.3 par l'intermédiaire
-- d'une fixation par adhésion et/ou
-- par la forme de la source de lumière 1.1.2 et de l'élément de fixation 1.1.3 et/ou
-- par une fusion des matériaux de la source de lumière 1.1.2 et de l'élément de fixation 1.1.3.

L'élément de fixation 1.1.3 a une forme qui correspond à la forme de la source de lumière 1.1.2, notamment en formant un angle ayant une première partie (ou branche) 1.1.3.1 de l'élément de fixation 1.1.3 qui est orientée horizontalement dans sa position d'utilisation (mais représenté verticalement dans la figure 3A), et ayant une deuxième partie (ou branche) 1.1.3.2 de l'élément de fixation 1.1.3 qui est orientée verticalement dans sa position d'utilisation (mais représenté horizontalement dans la figure 3A). L'élément de fixation 1.1.3 est notamment réalisé d'un matériau isolant électriquement, de préférence un matériau plastique. L'élément de fixation 1.1.3 est notamment positionné dans un logement d'un dispositif de support 3 du tableau de bord 1. Le dispositif de support 3 sert notamment pour recevoir une pluralité d'élément de lumière. Le dispositif de fixation 1.1.3 est attaché au dispositif de support 3
-- par l'intermédiaire d'une fixation par adhésion et/ou
-- par la forme du dispositif de fixation 1.1.3 et du dispositif de support 3 et/ou
-- par une fusion des matériaux du dispositif de fixation 1.1.3 et du dispositif de support 3.

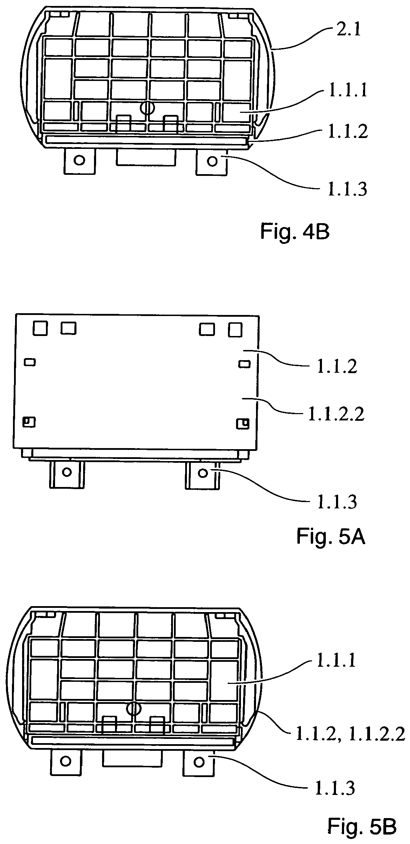

Les figures 4A et 4B sont des vues schématiques de dessus d'un élément de fixation 1.1.3 avec une source de lumière 1.1.2. Dans la figure 4A, la deuxième partie (ou branche) 1.1.2.2 de la source de lumière 1.1.2 est représentée. Dans la figure 4B, le dispositif d'affichage 1.1.1 et l'élément de cadre 2.1 sont représentés. La deuxième partie (ou branche) 1.1.2.2 de la source de lumière 1.1.2 comprend une surface qui correspond à une surface de la deuxième partie (ou branche) 1.1.3.2 du dispositif de fixation 1.1.3 de façon à ce que la surface de la deuxième partie (ou branche) 1.1.3.2 du dispositif de fixation 1.1.3 soit quasiment complètement couverte du dispositif d'affichage 1.1.1.

La surface du dispositif d'affichage 1.1.1 correspond quasiment complètement avec la surface de la deuxième partie (ou branche) 1.1.3.2 du dispositif de fixation 1.1.3 et avec la surface de la deuxième partie (ou branche) 1.1.2.2 de la source de lumière 1.1.2. Ainsi, cette surface de la source de lumière 1.1.2 est quasiment complètement couverte par le dispositif d'affichage 1.1.1.

Les figures 5A et 5B montrent un tableau de bord 1 selon la présente invention. Pour réaliser un rétro-eclairage de manière homogène de la deuxième partie 1.2 de la zone d'affichage (c'est à dire pour réaliser un rétro-eclairage homogène L à l'endroit de l'ouverture de diaphragme 1.3 de la deuxième partie 1.2 de la zone d'affichage), un dispositif de fixation 1.1.3 et une source de lumière 1.1.2 selon la présente invention sont montrés dans les figures 5A et 5B. Notamment dans la figure 5B, il est visible que la surface du dispositif de fixation 1.1.3 et notamment la surface de la source de lumière 1.1.2 selon la présente invention sont plus grande(s) que la surface du dispositif d'affichage 1.1.1 (et notamment aussi la surface de la deuxième partie (ou branche) 1.1.3.2 du dispositif de fixation 1.1.3) de façon à ce que la source de lumière 1.1.2 forme une première partie pour rétro-éclairer la première partie 1.1 de la zone d'affichage et une deuxième partie dans laquelle la source de lumière 1.1.2 dépasse la première partie 1.1 de la zone d'affichage.

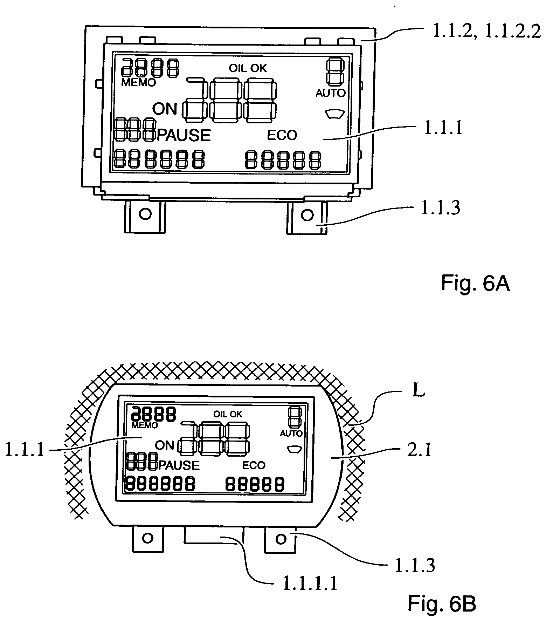

La figure 6A est une vue schématique de dessus d'un dispositif d'affichage 1.1.1 et d'une source de lumière 1.1.2 selon la Figure 5B et un dispositif de fixation 1.1.3. La figure 6A montre le dispositif d'affichage 1.1.1 dans son état illuminé.

La figure 6B est une vue schématique de dessus du dispositif d'affichage 1.1.1 rétro-éclairé avec des informations affichées, positionné dans l'élément de cadre 2.1 avec une illumination périphérique quasiment homogène dans la deuxième partie de la source de lumière 1.1.2. Lorsque le dispositif d'affichage 1.1.1 est positionné avec la source de lumière 1.1.2 et le dispositif de fixation 1.1.3 dans l'élément de cadre 2.1 du dispositif de cadre 2, l'émergence de lumière L (tel que représenté dans la figure 1) est réalisée à l'aide duquel un rétro-éclairage et une émergence de lumière L est possible de réaliser de façon homogène à l'endroit de la transition entre la première partie 1.1 de la zone d'affichage et la deuxième partie 1.2 de la zone d'affichage (c'est à dire en partie aussi un rétro-éclairage de la deuxième partie 1.2 de la zone d'affichage) sans qu'un élément supplémentaire ou plusieurs éléments supplémentaires soit nécessaires pour rétro-éclairer la deuxième partie 1.2 de la zone d'affichage.

### Liste des signes de référence

- 1: tableau de bord
- 1.1: première partie de la zone d'affichage
- 1.1.1: dispositif d'affichage
- 1.1.1.1: élément conducteur
- 1.1.2: source de lumière
- 1.1.2.1: première partie (ou branche) de la source de lumière
- 1.1.2.2: deuxième partie (ou branche) de la source de lumière
- 1.1.3: dispositif de fixation
- 1.1.3.1: première partie (ou branche) du dispositif de fixation
- 1.1.3.2: deuxième partie (ou branche) du dispositif de fixation
- 1.2: deuxième partie de la zone d'affichage
- 1.3: ouverture de diaphragme
- 2: dispositif de cadre
- 2.1: cadre / élément de cadre
- 3: dispositif de support
- L: émergence de la lumière à l'endroit de l'ouverture de diaphragme

## Revendications

1. Tableau de bord (1) pour véhicules automobiles, le tableau de bord comprenant au moins une zone d'affichage,
-- la zone d'affichage comprenant une première partie (1.1),
-- la zone d'affichage comprenant une deuxième partie (1.2),
la première partie (1.1) de la zone d'affichage étant localisé dans un premier plan d'extension principale,
la deuxième partie (1.2) de la zone d'affichage étant localisé dans un deuxième plan d'extension principale,
le deuxième plan d'extension principale étant localisé parallèle au premier plan d'extension principale, le deuxième plan d'extension principale étant translaté par rapport au premier plan d'extension principale vers un utilisateur du tableau de bord (1) de manière à ce que la deuxième partie (1.2) de la zone d'affichage forme une ouverture de diaphragme (1.3) au moins partiellement autour de la première partie de la zone d'affichage et que la première partie (1.1) de la zone d'affichage est localisée dans une zone centrale du tableau de bord (1),
le tableau de bord (1) comprenant une source de lumière (1.1.2), et la zone d'affichage comprenant un élément de cadre (2.1) pour définir la première partie (1.1) de la zone d'affichage, la source de lumière (1.1.2) comprenant une première partie pour rétro-éclairer la première partie (1.1) de la zone d'affichage, et la source de lumière (1.1.2) comprenant une deuxième partie dans laquelle la source de lumière (1.1.2) dépasse la première partie (1.1) de zone d'affichage, le tableau de bord (1) comprenant une aiguille entrainée en rotation autour d'un axe de rotation, l'axe de rotation étant prévue positionnée dans la première partie (1.1) de la zone d'affichage, **caractérisé en ce que** l'aiguille est visible par un utilisateur uniquement dans la deuxième partie (1.2) de la zone d'affichage.

2. Tableau de bord (1) selon la revendication 1, **caractérisé en ce que** la lumière de la deuxième partie de la source de lumière (1.1.2) illumine la région de l'élément de cadre (2.1) pour définir la première partie (1.1) de la zone d'affichage.

3. Tableau de bord (1) selon l'une quelconque des revendications précédentes, **caractérisé en ce que** l'illumination de la deuxième partie de la source de lumière (1.1.2) est visible par un utilisateur du tableau de bord (1).

4. Tableau de bord (1) selon l'une quelconque des revendications précédentes, **caractérisé en ce que** la lumière de la deuxième partie de source de lumière (1.1.2) est visible par un utilisateur du tableau de bord (1) dans la partie extérieur de l'élément de cadre (2.1) pour définir la première partie (1.1) de la zone d'affichage.

5. Tableau de bord (1) selon l'une quelconque des revendications précédentes, **caractérisé en ce que** la première partie (1.1) de la zone d'affichage comprend un dispositif d'affichage, notamment à cristaux liquides (LCD, en anglais: liquid crystal display).

6. Tableau de bord (1) selon l'une quelconque des revendications précédentes, **caractérisé en ce que** le dispositif d'affichage est un dispositif d'affichage de type matriciel.

7. Tableau de bord (1) selon l'une quelconque des revendications précédentes, **caractérisé en ce que** le tableau de bord (1) comprend une aiguille entrainée en rotation autour d'un axe de rotation, l'axe de rotation étant prévue positionnée dans la première partie (1.1) de la zone d'affichage, l'aiguille étant visible par un utilisateur dans la première partie (1.1) de la zone d'affichage.

8. Méthode d'assemblage d'un tableau de bord pour véhicules automobiles, le tableau de bord comprenant au moins une zone d'affichage,:
-- la zone d'affichage comprenant une première partie (1.1),
-- la zone d'affichage comprenant une deuxième partie (1.2),
la première partie (1.1) de la zone d'affichage étant localisé dans un premier plan d'extension principale,
la deuxième partie (1.2) de la zone d'affichage étant localisé dans un deuxième plan d'extension principale,
le deuxième plan d'extension principale étant localisé parallèle au premier plan d'extension principale, le deuxième plan d'extension principale étant translaté par rapport au premier plan d'extension principale vers un utilisateur du tableau de bord (1) de manière à ce que la deuxième partie (1.2) de la zone d'affichage forme une ouverture de diaphragme (1.3) au moins partiellement autour de la première partie de la zone d'affichage et que la première partie de la zone d'affichage est localisée dans une zone centrale du tableau de bord, le tableau de bord (1) comprenant
une source de lumière (1.1.2), et la zone d'affichage comprenant un élément de cadre (2.1) pour définir la première partie (1.1) de la zone d'affichage, la source de lumière (1.1.2) comprenant une première partie pour rétro-éclairer la première partie (1.1) de la zone d'affichage,
la méthode d'assemblage comprenant une étape pendant laquelle l'élément de (2.1) cadre est positionné tel que la deuxième partie de la source de lumière (1.1.2) dépasse la première partie (1.1) de la zone d'affichage, le tableau de bord (1) comprenant une aiguille entraînée en rotation autour d'un axe de rotation, l'axe de rotation étant prévue positionnée dans la première partie (1.1) de la zone d'affichage, **caractérisé en ce que** l'aiguille est visible par un utilisateur uniquement dans la deuxième partie (1.2) de la zone d'affichage.

## Patentansprüche

1. Armaturenbrett (1) für Kraftfahrzeuge, wobei das Armaturenbrett mindestens einen Anzeigenbereich umfasst,
-- wobei der Anzeigenbereich einen ersten Teil (1.1) umfasst,
-- wobei der Anzeigenbereich einen zweiten Teil (1.2) umfasst, wobei der erste Teil (1.1) des Anzeigenbereichs in einer ersten Haupterstreckungsebene angeordnet ist,
und der zweite Teil (1.2) des Anzeigenbereichs in einer zweiten Haupterstreckungsebene,
wobei die zweite Haupterstreckungsebene parallel zur ersten Haupterstreckungsebene angeordnet ist und die zweite Haupterstreckungsebene in Bezug auf die erste Haupterstreckungsebene zu einem Nutzer des Armaturenbretts (1) so verlagert wird, dass der zweite Teil (1.2) des Anzeigenbereichs eine Blendenöffnung (1.3), zumindest teilweise um den ersten Teil des Anzeigenbereichs formt und der erste Teil (1.1) des Anzeigenbereichs in einem zentralen Bereich des Armaturenbretts (1) angeordnet ist,
wobei das Armaturenbrett (1) eine Lichtquelle (1.1.2) aufweist, und der Anzeigenbereich ein Rahmenelement (2.1) zur Festlegung des ersten Teils (1.1) des Anzeigenbereichs, und die Lichtquelle (1.1.2) einen ersten Teil für die Hintergrundbeleuchtung des ersten Teils (1.1) des Anzeigenbereichs aufweist, und die Lichtquelle (1.1.2) einen zweiten Teil aufweist, in dem die Lichtquelle (1.1.2) über den ersten Teil (1.1) des Anzeigenbereichs hinausgeht. Das Armaturenbrett (1) weist
einen sich um eine Drehachse drehend angetriebenen Zeiger auf, wobei vorgesehen ist, dass die Drehachse im ersten Teil (1.1) des Anzeigenbereichs positioniert ist, **dadurch gekennzeichnet, dass** der Zeiger von einem Nutzer nur im zweiten Teil (1.2) des Anzeigenbereichs sichtbar ist.

2. Armaturenbrett (1) nach Anspruch 1, **dadurch gekennzeichnet, dass** das Licht des zweiten Teils der Lichtquelle (1.1.2) den Bereich des Rahmenelements (2.1) beleuchtet, um den ersten Teil (1.1) des Anzeigenbereichs festzulegen.

3. Armaturenbrett (1) nach einem der vorhergehenden Ansprüche, **dadurch gekennzeichnet, dass** die Beleuchtung des zweiten Teils der Lichtquelle (1.1.2) von einem Nutzer des Armaturenbretts (1) sichtbar ist.

4. Armaturenbrett (1) nach einem der vorhergehenden Ansprüche, **dadurch gekennzeichnet, dass** das Licht des zweiten Teils der Lichtquelle (1.1.2) von einem Nutzer des Armaturenbretts (1) im Teil außerhalb des Rahmenelements (2.1) zur Festlegung des ersten Teils (1.1) des Anzeigenbereichs sichtbar ist.

5. Armaturenbrett (1) nach einem der vorhergehenden Ansprüche, **dadurch gekennzeichnet, dass** der erste Teil (1.1) des Anzeigenbereichs eine Anzeigenvorrichtung, insbesondere mit Flüssigkristallen (LCD, auf Englisch: liquid crystal display) aufweist.

6. Armaturenbrett (1) nach einem der vorhergehenden Ansprüche, **dadurch gekennzeichnet, dass** die Anzeigenvorrichtung eine Matrixanzeigenvorrichtung ist.

7. Armaturenbrett (1) nach einem der vorhergehenden Ansprüche, **dadurch gekennzeichnet, dass** das Armaturenbrett (1) einen um eine Drehachse drehend angetriebenen Zeiger aufweist, wobei vorgesehen ist, dass die Drehachse im ersten Teil (1.1) des Anzeigenbereichs positioniert ist und dass der Zeiger von einem Nutzer nur im ersten Teil (1.1) des Anzeigenbereichs sichtbar ist.

8. Verfahren zur Montage eines Armaturenbretts für Kraftfahrzeuge, wobei das Armaturenbrett mindestens einen Anzeigenbereich umfasst,
-- wobei der Anzeigenbereich einen ersten Teil (1.1) umfasst,
-- wobei der Anzeigenbereich einen zweiten Teil (1.2) umfasst,
wobei der erste Teil (1.1) des Anzeigenbereichs in einer ersten Haupterstreckungsebene angeordnet ist, und der zweite Teil (1.2) des Anzeigenbereichs in einer zweiten Haupterstreckungsebene,
wobei die zweite Haupterstreckungsebene parallel zur ersten Haupterstreckungsebene angeordnet ist und die zweite Haupterstreckungsebene in Bezug auf die erste Haupterstreckungsebene zu einem Nutzer des Armaturenbretts (1) so verlagert wird, dass der zweite Teil (1.2) des Anzeigenbereichs eine Blendenöffnung (1.3), zumindest teilweise um den ersten Teil des Anzeigenbereichs formt und der erste Teil des Anzeigenbereichs in einem zentralen Bereich des Armaturenbretts angeordnet ist, wobei das Armaturenbrett (1) eine Lichtquelle (1.1.2) aufweist, und der Anzeigenbereich ein Rahmenelement (2.1) zur Festlegung des ersten Teils (1.1) des Anzeigenbereichs, und die Lichtquelle (1.1.2) einen ersten Teil für die Hintergrundbeleuchtung des ersten Teils (1.1) des Anzeigenbereichs aufweist, wobei das Montageverfahren einen Schritt umfasst, bei dem das Rahmenelement (2.1) so positioniert wird, dass der zweite Teil der Lichtquelle (1.1.2) über den ersten Teil (1.1) des Anzeigenbereichs hinausgeht. Das Armaturenbrett (1) weist einen sich um eine Drehachse drehend angetriebenen Zeiger auf, wobei vorgesehen ist, dass die Drehachse im ersten Teil (1.1) des Anzeigenbereichs positioniert ist, **dadurch gekennzeichnet, dass** der Zeiger von einem Nutzer nur im zweiten Teil (1.2) des Anzeigenbereichs sichtbar ist.

## Claims

1. A dashboard (1) for automobiles, the dashboard including at least one display zone,
- the display zone including a first part (1.1),
- the display zone including a second part (1.2),
the first part (1.1) of the display zone being located in a first plane of principal extent,
the second part (1.2) of the display zone being located in a second plane of principal extent,
the second plane of principal extent being located parallel to the first plane of principal extent, the second plane of principal extent being translated towards a user of the dashboard (1) with respect to the first plane of principal extent in such a manner that the second part (1.2) of the display zone forms a diaphragm opening (1.3) at least partially around the first part of the display zone and that the first part (1.1) of the display zone is located in a central zone of the dashboard (1),
the dashboard (1) including a light source (1.1.2), and the display zone including a frame element (2.1) for defining the first part (1.1) of the display zone, the light source (1.1.2) including a first part for back-lighting the first part (1.1) of the display zone, and the light source (1.1.2) including a second part in which the light source (1.1.2) extends beyond the first part (1.1) of the display zone, the dashboard (1) including a needle rotated about an axis of rotation, the axis of rotation being provided positioned in the first part (1.1) of the display zone, **characterized in that** the needle is visible to a user only in the second part (1.2) of the display zone.

2. The dashboard (1) according to claim 1, **characterized in that** the light of the second part of the light source (1.1.2) illuminates the region of the frame element (2.1) for defining the first part (1.1) of the display zone.

3. The dashboard (1) according to either of the preceding claims, **characterized in that** the illumination of the second part of the light source (1.1.2) is visible to a user of the dashboard (1).

4. The dashboard (1) according to any one of the preceding claims, **characterized in that** the light of the second part of the light source (1.1.2) is visible to a user of the dashboard (1) in the exterior part of the frame element (2.1) for defining the first part (1.1) of the display zone.

5. The dashboard (1) according to any one of the preceding claims, **characterized in that** the first part (1.1) of the display zone includes a display device, in particular a liquid crystal display device (LCD in English: liquid crystal display).

6. The dashboard (1) according to any one of the preceding claims, **characterized in that** the display device is a matrix-type display device.

7. The dashboard (1) according to any one of the preceding claims, **characterized in that** the dashboard (1) includes a needle rotated about an axis of rotation, the axis of rotation being provided positioned in the first part (1.1) of the display zone, the needle being visible to a user in the first part (1.1) of the display zone.

8. A method for assembling a dashboard for automobiles, the dashboard including at least one display zone,
- the display zone including a first part (1.1),
- the display zone including a second part (1.2),
the first part (1.1) of the display zone being located in a first plane of principal extent,
the second part (1.2) of the display zone being located in a second plane of principal extent,
the second plane of principal extent being located parallel to the first plane of principal extent, the second plane of principal extent being translated towards a user of the dashboard (1) with respect to the first plane of principal extent in such a manner that the second part (1.2) of the display zone forms a diaphragm opening (1.3) at least partially around the first part of the display zone and that the first part (1.1) of the display zone is located in a central zone of the dashboard,
the dashboard (1) including a light source (1.1.2), and the display zone including a frame element (2.1) for defining the first part (1.1) of the display zone, the light source (1.1.2) including a first part for back-lighting the first part (1.1) of the display zone,
the assembly method including a step during which the frame element (2.1) is positioned so that the second part of the light source (1.1.2) extends beyond the first part (1.1) of the display zone, the dashboard (1) including a needle rotated about an axis of rotation, the axis of rotation being provided positioned in the first part (1.1) of the display zone, **characterized in that** the needle is visible to a user only in the second part (1.2) of the display zone.
